# EUROPÄISCHE PATENTSCHRIFT

(11) **EP 2 233 834 B1**
(45) Veröffentlichungstag und Bekanntmachung des Hinweises auf die Patenterteilung: **30.05.2018**
(21) Anmeldenummer: 10002529.5
(22) Anmeldetag: 10.03.2010
(51) Int. Cl.: F23G 5/033, F23G 5/02, F23G 5/04, F23G 5/44, F23G 5/50, C10L 5/46, C10L 5/48

(54) **Verfahren und Vorrichtung zur Verarbeitung von staubförmigen und/oder flüssig/pastösen Abfallstoffen sowie Herstellung eines Mischbrennstoffes**
Method and device for processing particulate and/or liquid/paste waste materials and producing a mixed fuel
Procédé et dispositif de traitement de déchets formant de la poussière et/ou liquides/pâteux ainsi que fabrication d'un combustible mixte

(30) Priorität: 27.03.2009 DE 102009014717
(43) Veröffentlichungstag der Anmeldung: 29.09.2010
(73) Patentinhaber: MUEG Mitteldeutsche Umwelt-und Entsorgung GmbH, 06242 Braunsbedra (DE)
(72) Erfinder: Saal, Wolfgang, 06255 Schafstädt (DE); Stachowski, Frank, 06667 Prittitz (DE); Hoger, Matthias, 04579 Espenhain (DE); Bunzel, Jörg-Michael, 06249 Mücheln (DE)
(74) Vertreter: Zinken-Sommer, Rainer

(56) Entgegenhaltungen:
- DE-A1- 2 222 420
- DE-A1- 3 244 123
- DE-A1- 4 205 096
- DE-A1- 4 407 542
- DE-A1- 19 937 700
- PORSCHE T ET AL: "MITVERBRENNUNG VON MISCHBRENNSTOFFEN AUS TEERRUECKSTAENDEN IN DEN BRAUNKOHLEKRAFTWERKEN SCHWARZE PUMPE", VGB KRAFTWERKSTECHNIK, VGB KRAFTWERKSTECHNIK GMBH. ESSEN, DE, Bd. 80, Nr. 9, 1. September 2000 (2000-09-01), Seiten 66-70, XP000959497, ISSN: 0372-5715

## Beschreibung

Die Erfindung betrifft ein Verfahren und eine Vorrichtung zur Verarbeitung von staubförmigen und/oder flüssig/pastösen Abfallstoffen sowie zur Herstellung eines Mischbrennstoffes, wobei die Abfallstoffe in geschlossenen Behältern angeliefert und in einer Aufbereitungsanlage zu einem staubförmigen Brennstoff und/oder einem schüttfähigen Mischbrennstoff gemischt werden oder störstoffbefreite staubförmige Abfallstoffe ausgeschleust werden können.

Staubförmige, flüssige und pastöse Abfallstoffe wurden häufig einer Deponie zur Lagerung zugeführt. Da in diesen Abfällen oftmals für die Umwelt sehr problematische Stoffe beinhaltet sind, müssen sie mit aufwendigen Einlagerungsbestimmungen und sehr hohen Kosten verbunden abgelagert werden.

Aus diesem Grunde hat es immer wieder Versuche gegeben, derartige Abfallstoffe so aufzubereiten und zu nutzen, dass eine Einlagerung auf Deponien weitestgehend vermieden wird und die energiereichen Abfallstoffe einem höherwertigen Entsorgungsweg zugeführt werden.

In diesem Sinne gibt es beispielsweise für staubförmige Abfälle aus mit fossilen Brennstoffen betriebenen Kraftwerken eine Vielzahl von Lösungen zur Nutzung als Baustoff, wobei zumeist die umweltschädlichen Bestandteile durch andere Bestandteile dauerhaft (oftmals hydraulisch) eingebunden bzw. auslaugsicher immobilisiert werden.

Auch sind Verfahren bekannt, nach denen verschiedene Abfallstoffe in derart miteinander vermischt werden, dass das Gemisch anschließend als Mischbrennstoff einer thermischen Verwertung/Entsorgung zugeführt werden kann. Allerdings verbleiben auch nach diesen Verfahren letztendlich belastete Aschen zurück, die dann u. U. wiederum doch aufwendig deponiert werden müssen.

Bekannt ist ein Verfahren und eine Vorrichtung zur Herstellung eines synthetischen Brennstoffes aus Haus- und/oder Gewerbemüll sowie sonstigen Abfällen, der eine kohlenwasserstoffhaltige Flüssigkeit zugesetzt wird, die sich aus vorzugsweise durch Destillation entstandenen Ölschlämmen zusammensetzt (DE 10 2007 004 106 A1).

Weiterhin ist ein Verfahren zur Verwertung von Abfallstoffen mit brennbaren Bestandteilen aus der DE 27 48 510 A1 bekannt, wobei eine Vielzahl von Abfallstoffen gemischt, verbrannt bzw. einer Pyrolyse zugeführt werden.

Die DE 601 04 846 T3 beschreibt ein Verfahren zur Aufbereitung von Abfallstoffen, wobei insbesondere recyclingfähige Materialien separiert und vom restlichen Abfall getrennt werden, so dass Faseranteile zu einem Brei aufgelöst und suspensioniert sowie Kunststoffanteile gewaschen, wiederaufbereitet und mit den Faseranteilen vermischt werden, wobei der Kunststoffanteil in einer Pyrolyse zu Kunststofföl aufbereitet wird.

Darüber hinaus ist ein Verfahren und eine Vorrichtung zur Entsorgung von Abfall bekannt, wobei Metall- und Kunststoffbestandteile in einem Wasserbecken getrennt, der Kunststoffanteil zu einem Granulat gemahlen, anschließend getrocknet und mit Abfall sowie Klärschlamm in einem bestimmten Verhältnis zu Pelletts verpresst und danach verbrannt werden (DE 10 2005 017 334 A1). Aus der DE 44 07 542 A1 ist ein Verfahren zur Reststoffverarbeitung und eine diesbezügliche Vorrichtung bekannt, wobei trockene Reststoffe vorzugsweise aus Abfallverbrennungsanlagen zusammen mit dem Transportbehälter (Kunststoff-Big-Bags) verfahrenstechnisch verarbeitet und anschließend in einem Mischer vermischt und deponiert werden. Die Zerkleinerung der Big-Bags erfolgt dabei durch einen Zerfaserer, der mit zwei oder mehr schnelllaufenden Walzen ausgeführt ist. Für die Staubabscheidung wird ein Naßabscheider eingesetzt. Die Unterdruckerzeugung zur Abluftfilterung erfolgt über einen Industriestaubsauger. DE4205096 A1 offenbart ein Vorfahren gemäß dem Oberbegriff des unabhängigen Anspruchs 1.

Allen vorgenannten Verfahren ist gemeinsam, dass eine einfache, kostengünstige und wirkungsvolle sowie den Umweltbestimmungen entsprechende Verarbeitung von verschiedensten Abfallstoffen mit unterschiedlicher Konsistenz zu einem für eine nachfolgende Verbrennung geeigneten Mischbrennstoff nicht gegeben ist.

Der Erfindung liegt die Aufgabe zugrunde, ein Verfahren und eine Vorrichtung zu entwickeln, welche eine einfache, kostengünstige und wirkungsvolle sowie den Umweltbestimmungen entsprechende Verarbeitung von verschiedensten Abfallstoffen aus verschiedenen Transportgefäßen mit unterschiedlicher Konsistenz zu einem für eine nachfolgende Verbrennung geeigneten Mischbrennstoff oder staubförmigen Brennstoff gewährleistet.

Dies wird erfindungsgemäß durch ein Verfahren gemäß Anspruch erreicht. Als staubförmige Abfallstoffe werden Abfallruße und/oder Lack- und/oder Farbpulver und/oder andere staubförmigen Abfälle verwendet.

Als flüssige/pastöse Abfallstoffe werden Ölschlämme und/oder Altöle und/oder Papierschlämme und/oder Klärschlämme und/oder biogene Fraktionen und/oder Ersatzbrennstoffe und/oder andere flüssige/pastöse Materialien verwendet.

Die staubförmigen Abfallstoffe weisen Störstoffe, wie Textilien (Handschuhe, Schuhe, Putztücher) und/oder Papier und/oder Holz und/oder Folien und/oder NE-Metalle und/oder Fe-Metalle und/oder andere vergleichbare Stoffe auf, die vor einer Weiterarbeitung ab einem Überkornanteil von > 4 mm separiert werden müssen.

Als Aufnahmevorrichtung für die Big Bags wird eine gekapselte modular aufgebaute Umhausung mit Aufnahmen für die Big Bag-Traverse verwendet, wobei die Big Bags in der Aufnahmevorrichtung durch Niederhalter fixiert und auf drehbaren Stangen und/oder Rollen, die mit Messern versehen sind und der Zerkleinerung oder Perforation von in den Big-Bags und/oder ASP-Behältern befindlichen Verpackungen abgesetzt werden, zwischen denen als Schneid- und/oder Trennwerkzeuge eine mit Messern besetzte Kette geführt wird, die in einer umlaufenden, über Kettenräder angetriebenen Konstruktion geführt wird.

Die Big Bags werden nach ihrer Entleerung nach oben gezogen, aus der Austragsvorrichtung entnommen und einer Big Bag-Verdichtung zugeführt.

Die ASP-Behälterentleerung findet in einem weiteren Modul der Entleerstation statt. Dabei kommt eine Kippvorrichtung mit integriertem Stangenrost zum Einsatz. Der Stangenrost hält größere in den ASP-Behältern befindliche Verpackungen (z.B. Big-Bags) zurück. Das Material gelangt analog der Big-Bag-Entleerung auf die nachgeschaltete Störstoffbefreiung.

Der Big-Bag-bzw. ASP-Behälterinhalt gelangt auf ein unter der Entleerungsstation angeordnetes Schwingsieb. Das Schwingsieb führt eine horizontal schwingende Bewegung aus. Über das Sieb werden langsam laufende Kratzer und Bürsten, die über einen Kettenzug angetrieben werden, geführt. Diese transportieren das Material über das Sieb wobei die Bürsten für die Reinigung des Lochbleches zuständig sind. Das staubförmige Material fällt als Unterkorn (< 4mm) durch das Sieb wobei das Überkorn (Störstoffe > 4 mm) durch die Kratzer auf dem Sieb in Richtung der Störstoffausschleusung transportiert wird.
Das Unterkorn wird unterhalb des Siebes durch die zurücklaufenden Kratzer auf einem Kratzerboden in entgegengesetzter Richtung zu den Störstöffen zur Metallabscheidung über Rohmagnete und anschließend zur pneumatischen Förderung in das Outputsilo oder in die Vorlagesilos transportiert.
Die Störstoffe gelangen über ein Förderband in einen Presscontainer.

Der gesamte Anlagenkomplex der Big-Bag- und ASP-Behälterentleerung, Störstoffbefreiung sowie der Transport der Materialien wird mittels einer Entstaubungsanlage im Unterdruck gehalten und entstaubt. Damit wird ein Austreten von Staub ins Äußere der Anlage auf ein Minimum reduziert. Die Entstaubungsanlage scheidet den abgezogenen Staub in die Transporteinrichtung zum Outputsilo des Staubes ab.

Die flüssigen bzw. pastösen Materialien werden nach der Anlieferung ggf. vorkonditioniert und per Bagger oder Radlader der jeweiligen Dosiereinheit für flüssige bzw. pastöse Materialien zugeführt. Flüssiges Material wird per Dickstoffpumpe, pastöses Material per Förderband zu dem Mischer transportiert. Über ein Dosiersilo oberhalb des Mischers erfolgt die Zugabe des staubförmigen Materials. Das Mischungsverhältnis wird durch integrierte Wageeinrichtungen über die SPS eingestellt.
Das Dosiersilo wird über die Vorlagesilos der Big-Bag-Entleerstation gespeist.
Das gemischte Material wird nach dem Mischer an ein Förderband übergeben, welches das Mischprodukt in das Outputlager übergibt, aus dem der nunmehrig entstandene Mischbrennstoff bedarfsweise einer thermischen Verwertung in einem Kraftwerk zugeführt wird.

Die Vorrichtung zur Durchführung des Verfahrens nach Anspruch 1 ist durch die Merkmale des Anspruchs 26 gekennzeichnet, wobei
- ein Lager (30) für in Big-Bags (27) und in ASP-Behältern (26) angelieferte staubige Abfallstoffe eine modulartige Aufnahmevorrichtung und eine Transportvorrichtung mit einem Schwingsieb (31) zur Aufteilung in einen Über- und einen Unterkornanteil verbunden ist, wobei
- der Ausgang des Schwingsiebes (31) für den Unterkornanteil aus den staubförmigen Abfallstoffen durch eine Magnetabscheidung (25) mit mindestens einem Silo (12; 14) pneumatisch verbunden ist, wobei das/die Silo(s) (12; 14) mit einer Dosiereinrichtung (11) zur Aufgabe der Abfallstoffe in einen Mischer (9) gekoppelt ist,
- ein mit flüssigen Abfallstoffen beaufschlagter Behälter (1) über eine Fördereinrichtung (1a) mit einem Beschicker (2) verbunden ist, der über eine Dickstoffpumpe (3) an den Mischer (9) gekoppelt ist,
- ein mit pastösen Abfallstoffen und Zuschlagstoffen gefüllter Behälter (4) über eine Fördereinrichtung (4a) mit einen Beschicker (5) für das Vorgemisch verbunden ist, der über eine Mischschnecke (6) und einen mit einem Magnetabscheider (8) ausgestatteten Förderer (7) ebenfalls mit dem Mischer (9) gekoppelt ist,
- darüber hinaus ein mit staubförmigen Abfallstoffen gefüllter Dosiertrichter (11) über eine Fördereinrichtung (10) mit dem Mischer (9) mit Wasserdosierung gekoppelt ist, wobei
- der Auslaß des Mischer (9) über einen Förderer (18) mit einem Outputlager verbunden ist, aus welchem über eine Verladeeinrichtung (19) ein Transportmittel (20) zu beschicken ist.

### Vorteile der Erfindung:

- Verwertung verschiedener Abfallstoffe in unterschiedlichen Konsistenzen zu einem Produkt
- sichere Verwertung in einem Kraftwerk, Zementwerk oder ähnlichen
- Minderung der Menge an Abfällen zur Ablagerung auf Deponien
- Einsparung von Deponiekosten
- komplexes Verarbeitungsverfahren mit zugelassener Technologie und ohne negative Umweltbeeinflussung
- Bereitstellung von störstoffbefreiten, staubförmigen Abfallstoffen zum Transport in Silofahrzeugen und direkter Verwendung in z.B. Staubfeuerungsanlagen oder als Zuschlagstoff in Staubfabriken zur Brennstaubherstellung (z. B. bei der Braunkohlenstaubherstellung)
- Nutzung energiereicher Abfälle zur thermischen und/oder elektrischen Energiegewinnung
- Bereitstellung von störstoffbefreiten, staubförmigen Abfallstoffen zum Transport in Silofahrzeugen und direkter Verwendung im z. B. Untertageversatz

### Ausführungsbeispiel

Die Erfindung soll nachstehend anhand eines Ausführungsbeispieles näher erläutert werden.

Dabei zeigt:
- Figur 1 - Teil 1 des Verfahrensschemas als Skizze
- Figur 2 - Teil 2 des Verfahrensschemas als Skizze

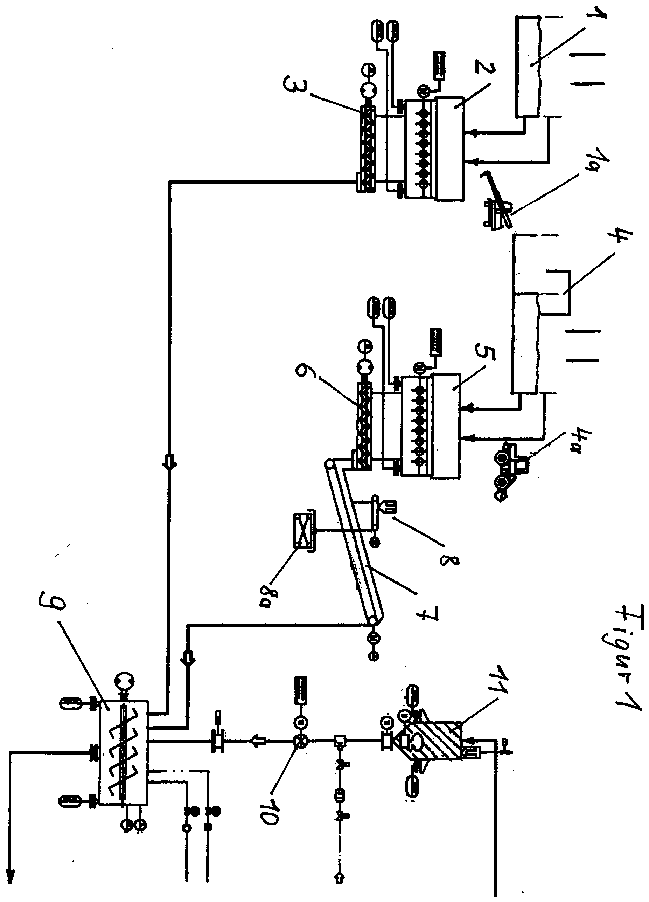

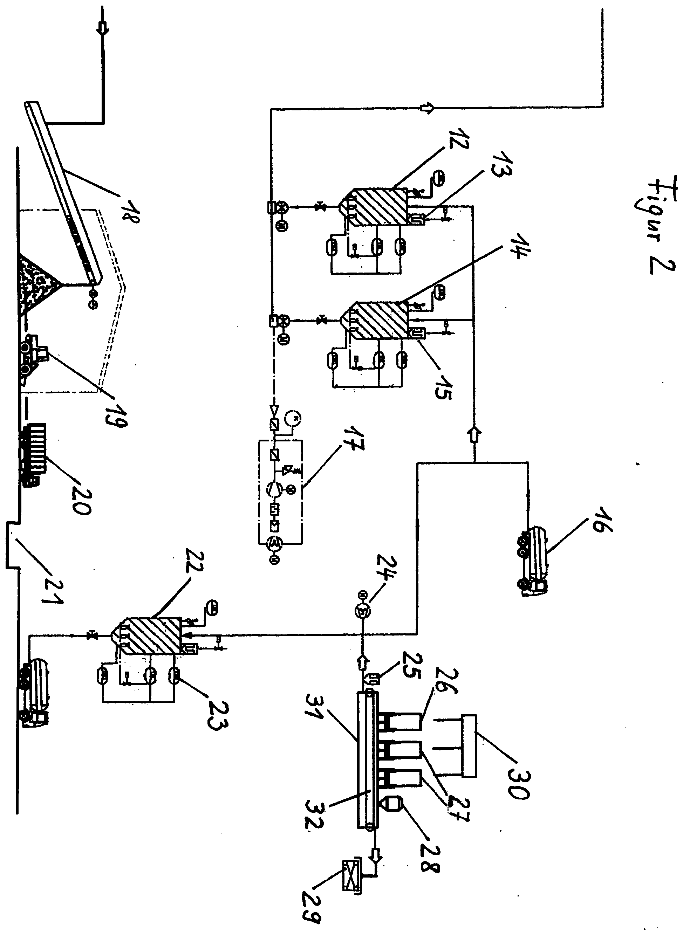

Ein Lager 30 für in Big-Bags 27 angelieferte staubige Abfallstoffe ist über eine modulartige Aufnahmevorrichtung und eine Transportvorrichtung mit einem Schwingsieb 31 zur Aufteilung in einen Über- und einen Unterkornanteil verbunden,
- wobei der Ausgang des Schwingsiebes 31 für den Unterkornanteil mit mindestens einem Silo 12; 14 pneumatisch verbunden ist,
- wobei das/die Silo(s) 12; 14 mit einer Dosiereinrichtung 11 zur Aufgabe der Abfallstoffe in einen Mischer 9 gekoppelt ist,
- ein mit flüssigen Abfallstoffen beaufschlagter Behälter 1 über eine Fördereinrichtung 1a mit einem Beschicker 2 verbunden ist, der über eine Dickstoffpumpe 3 an den Mischer 9 gekoppelt ist,
- ein mit pastösen Abfallstoffen und Zuschlagstoffen gefüllter Behälter 4 über eine Fördereinrichtung 4a mit einen Beschicker 5 für das Vorgemisch verbunden ist, der über eine Mischschnecke 6 und einen mit einem Magnetabscheider 8 ausgestatteten Förderer 7 ebenfalls mit dem Mischer 9 gekoppelt ist,
- darüber hinaus ein mit staubförmigen Abfallstoffen gefüllter Dosiertrichter 11 über eine Fördereinrichtung 10 mit dem Mischer 9 gekoppelt ist,
- wobei der Auslaß des Mischer 9 über einen Förderer 18 mit einem Outputlager verbunden ist, aus welchem über eine Verladeeinrichtung 19 ein Transportmittel 20 zu beschicken ist (Figur 1 und 2).

Der Auslaß des Schwingsiebes 31 für den Überkornanteil ist mit einem Störstoffbehälter 29 verbunden.

Das/die Silo(s) 12; 14 weist jeweils einen Siloaufsatzfilter 13; 14 auf.

Der Auslaß des Schwingsiebes 31 für den Unterkornanteil ist zusätzlich über ein Silo 22 mit einem Transportmittel verbunden.

Das Schwingsieb 31 einen Filter 28 aufweist. Der Auslaß des/der Silo(s) 12; 14 ist mit einem pneumatischen Fördergebläse 17 verbunden.

Das/die Silo(s) 12; 14 weisen jeweils einen Siloaufsatzfilter 13; 14 auf.

Der Auslaß des Schwingsiebes 31 für den Unterkornanteil zusätzlich über ein Silo 22 mit einem Transportmittel verbunden ist. Das Schwingsieb 31 weist einen Filter 28 auf.

Das Mischungsverhältnis der einzelnen Stoffe ist stark von der Konsistenz der angelieferten Ausgangsstoffe abhängig, die häufig schwankt. So ist das Verhältnis zwischen einem Abfallruß oder Farb- oder Lackpulver als staubförmigen Abfallstoff und einem Ölschlamm als flüssigen/pastösen Abfallstoff von der Konsistenz und den Inhaltstoffen des Ölschlammes abhängig. Es ist somit, immer notwendig, dass von den jeweils angelieferten Abfallstoffen Proben genommen werden, die anschließend labortechnisch untersucht werden, um eine optimale Mischung des Produktes zu erreichen.

Je pastöser das Material ist, umso weniger Rußbestandteile müssen eingebracht werden. Je flüssiger der Ölschlamm ist, umso mehr Ruß muss zugegeben werden. Das Mischungsverhältnis von Ruß zu Schlamm beträgt in der Regel 10 Ma-% bis 60 M-% Ruß zu 90 bis 40 M-% Ölschlamm.

Die Entscheidung, ob und in welcher Art eine Vorkonditionierung der flüssig/pastösen Abfälle notwendig ist, wird entsprechend der Ergebnisse der chemischen und physikalischen Untersuchungen festgelegt.

Als Vorkonditionierungsmittel kommen Stoffe mit bindigen Eigenschaften in Betracht. Dies können Papierschlämme, Lackschlämme, biogene Fraktionen, Klärschlämme oder Ersatzbrennstoffe sein.

Der entstehende Mischbrennstoff ist durch folgende Bestandteile gekennzeichnet:

### Mischungsverhältnisse Entleerstation für verpackte staubförmige Abfälle und mit nachgeschalteter Aufbreitung zur Herstellung eines Mischbrennstoffs

**Variante Zweistoffnemiseh**

| Verhältnis | Abfallstaubförmig | Abfall flüssig/pastös | Gesamt |
|---|---|---|---|
| | Ma-% | Ma-% | Ma-% |
| 1 | 60 | 40 | 100 |
| 2 | 55 | 45 | 100 |
| 3 | 50 | 50 | 100 |
| 4 | 45 | 55 | 100 |
| 5 | 40 | 60 | 100 |
| 6 | 35 | 65 | 100 |
| 7 | 30 | 70 | 100 |
| 8 | 25 | 75 | 100 |
| 9 | 20 | 80 | 100 |
| 10 | 15 | 85 | 100 |
| 11 | 10 | 90 | 100 |

**Variante Drei-/Mehrstoffaemisch Beispiel 1**

| Verhältnis | Abfallstaubförmig | Abfall flüssig/pastös | Papierschlämme, Lackschlämme, biogene Fraktion, Ersatzbrennstoffe | Gesamt |
|---|---|---|---|---|
| | Ma-% | Ma-% | Ma-% | Ma-% |
| 1 | 60 | 30 | 10 | 100 |
| 2 | 55 | 35 | 10 | 100 |
| 3 | 50 | 40 | 10 | 100 |
| 4 | 45 | 45 | 10 | 100 |
| 5 | 40 | 50 | 10 | 100 |
| 6 | 35 | 55 | 10 | 100 |
| 7 | 30 | 60 | 10 | 100 |
| 8 | 25 | 65 | 10 | 100 |
| 9 | 20 | 70 | 10 | 100 |
| 10 | 15 | 75 | 10 | 100 |
| 11 | 10 | 80 | 10 | 100 |

**Variante Drei-/Mehrstoffaemisch Beispiel 2**

| Verhältnis | Abfall-Ruß | Ölschlamm | Papierschlämme, Lackschlämme, biogene Fraktion, Ersatzbrennstoffe | Gesamt |
|---|---|---|---|---|
| | Ma-% | Ma-% | Ma-% | Ma-% |
| 1 | 60 | 25 | 15 | 100 |
| 2 | 55 | 30 | 15 | 100 |
| 3 | 50 | 35 | 15 | 100 |
| 4 | 45 | 40 | 15 | 100 |
| 5 | 40 | 45 | 15 | 100 |
| 6 | 35 | 50 | 15 | 100 |
| 7 | 30 | 55 | 15 | 100 |
| 8 | 25 | 60 | 15 | 100 |
| 9 | 20 | 65 | 15 | 100 |
| 10 | 15 | 70 | 15 | 100 |
| 11 | 10 | 75 | 15 | 100 |

### Liste der verwendeten Bezugszeichen

1 - Lager flüssige Ölschlämme
1a - Transportmittel (Bagger)
2 - Beschicker für flüssige Ölschlämme
3 - Dickstoffpumpe
4 - Lager / Vorkonditionierung pastöser Ölschlämme
4a - Transportmittel (Radlader)
5 - Beschicker
6 - Mischschnecke
7 - Förderer (Gurtbandförderer)
8 - Magnetabscheider
8a - Schrottbehälter
9 - Mischer mit Wasserdosierung
10 - Fördereinrichtung (Zellenradschleuse)
11 - Dosiereinrichtung
12 - Silo
13 - Siloaufsatzfilter
14 - Silo
15 - Siloaufsatzfilter
16 - Silofahrzeug
17 - Gebläse für pneumatische Förderung
18 - Förderer (Gurtbandförderer)
19 - Transportmittel (Radlader)
20 - Transportmittel (Lastzug)
21 - Reifenwaschanlage
22 - Silo (LKW-Verladung)
23 - Siloaufsatzfilter)
24 - Pneumatik-Aggregat
25 - Magnetabscheider
26 - ASP-Behälterentladung
27 - BIG-Bag-Entladung
28 - Filter
29 - Störstoffcontainer
30 - Lager
31 - Schwingsieb
32 - Transportvorrichtung mit Kratzern und/oder Bürsten

## Patentansprüche

1. Verfahren zur Verarbeitung von staubförmigen und/oder flüssig/pastösen Abfallstoffen sowie zur Herstellung eines Mischbrennstoffes, wobei die Abfallstoffe in geschlossenen Behältern angeliefert und in einer Aufbereitungsanlage zu einem staubförmigen Brennstoff und/oder schüttfähigen Mischbrennstoff verarbeitet werden,
***gekennzeichnet dadurch, dass*** mit staubförmigen Abfallstoffen gefüllten Big-Bags (27) und/oder ASP-Behälter (26) mindestens einer modulartigen Aufnahmevorrichtung zugeführt, mittels eines Schneid- oder Trennwerkzeuges geöffnet und die staubförmigen Abfallstoffe auf eine Transportvorrichtung (32) mit Kratzern und/oder Bürsten entleert und mittels mindestens eines Schwingsiebes (31) in einen Unterkorn- und ein Überkornanteil aufgeteilt werden, wobei der Unterkornanteil unterhalb des Schwingsiebes (31) durch die zurücklaufenden Kratzer und/oder der Transportvorrichtung in entgegengesetzter Richtung zum Überkorn in mindestens ein Outputsilo (12; 14; 22) und der Überkornanteil über eine Fördereinrichtung in mindestens einen Presscontainer/Störstoffcontainer (29) transportiert werden, parallel in geschlossenen Behältern angelieferte flüssige/pastöse Abfallstoffe von Behältern (1, 4) über eine Beschicker (2, 5), reine Dickstoffpumpe (3) und eine Mischschnecke (6) sowie feiner anschließenden Metallaushaltung (8) durch einen Überbandmagnet, über eine Transportvorrichtung (7) zu einem Mischer (9) geführt und beide Stoffströme der Abfallstoffe aus dem mindestens einen Outputsilo (12; 14) über ein Dosiersilo (11) mit integrierter Wägeeinrichtung dem diskontinuierlich oder kontinuierlich arbeitenden Mischer (9) zugeführt werden bzw. eine Abgabe an Silofahrzeuge zur externen Verwertung erfolgt, wobei anschließend das Gemisch über eine Fördervorrichtung (18) in ein Outputlager transportiert wird und die Big-Bags - und ASP-Behälter -Entleerung über im Unterdruckbereich arbeitende Vorrichtungen (13; 15; 23; 28) entstaubt wird.

2. Verfahren nach Anspruch 1, ***gekennzeichnet dadurch, dass*** als staubförmige Abfallstoffe Abfallruße und/oder Lack- und/oder Farbpulver und/oder andere staubförmigen Materialien verwendet werden.

3. Verfahren nach Anspruch 1, ***gekennzeichnet dadurch, dass*** als flüssige/pastöse/feste Abfallstoffe Ölschlämme und/oder Altöle und/oder Papierschlämme und/oder Klärschlämme und/oder biogene Fraktionen und/oder Ersatzbrennstoffe und/oder saugfähige Abfallstoffe und/oder andere flüssige/pastöse/feste Materialien verwendet werden.

4. Verfahren nach Anspruch 1 und 2, ***gekennzeichnet dadurch, dass*** die staubförmigen Abfallstoffe Störstoffe wie Textilien und/oder Papier und/oder Holz und/oder Folien und/oder NE-Metalle und/oder Fe-Metalle und/oder andere vergleichbare Stoffe aufweisen.

5. Verfahren nach Anspruch 1 und 4, ***gekennzeichnet dadurch, dass*** als Aufnahmevorrichtung eine gekapselte Aufgabeeinheit für Big-Bags mit entsprechenden Traversen mit Aufhängung für die Big-Bag-Schlaufen verwendet wird.

6. Verfahren nach Anspruch 1, ***gekennzeichnet dadurch, dass*** die Big-Bags in der Aufnahmevorrichtung durch Niederhalter fixiert und auf drehbaren Stangen und/oder Rollen, die mit Messern versehen sind abgesetzt werden, zwischen denen als Schneid- und/oder Trennwerkzeuge eine mit Messern besetzte Kette geführt wird.

7. Verfahren nach Anspruch 6, ***gekennzeichnet dadurch, dass*** die Kette in einer umlaufenden, über Kettenräder angetriebenen Konstruktion geführt wird.

8. Verfahren nach Anspruch 1, 5, 6 und 7, ***gekennzeichnet dadurch, dass*** die Big-Bags nach ihrer Entleerung nach oben gezogen, aus der Austragsvorrichtung entnommen und einer Big-Bag-Verdichtung zugeführt werden.

9. Verfahren nach Anspruch 1, ***gekennzeichnet dadurch, dass*** staubförmige Abfallstoffe in einem zugelassenen ASP-Behälter angeliefert werden.

10. Verfahren nach Anspruch 1 und 9, ***gekennzeichnet dadurch, dass*** zur Entleerung der ASP-Behälter eine mit einem integrierten Stangenrost ausgestattete Kippvorrichtung verwendet wird.

11. Verfahren nach Anspruch 1, ***gekennzeichnet dadurch, dass*** über das Schwingsieb (31) langsam laufende Kratzer und Bürsten geführt werden.

12. Verfahren nach Anspruch 11, ***gekennzeichnet dadurch, dass*** die Kratzer und Bürsten über einen Kettenzug angetrieben werden.

13. Verfahren nach Anspruch 1, ***gekennzeichnet dadurch, dass*** die flüssigen/pastösen Abfallstoffe nach ihrer Anlieferung chemisch und physikalisch speziell Schwermetalle, Heizwert, Halogene, Konsistenz untersucht werden, um festzustellen ob vorkonditioniert wird oder nicht und bei einem Vorliegen von Abweichungen zur gewünschten zu erzielenden Brennstoffqualität einer Vorkonditionierung zugeführt werden.

14. Verfahren nach Anspruch 1, ***gekennzeichnet dadurch, dass*** zur Vorkonditionierung Materialien mit bindigen, saugfähigen Eigenschaften, wie vorzugsweise Papierschlämme, Lackschlämme, biogene Fraktionen und Ersatzbrennstoffe verwendet werden.

15. Verfahren nach Anspruch 1, ***gekennzeichnet dadurch, dass*** die flüssigen Abfallstoffe über eine Dickstoffpumpe (3) dem Mischer (9) zugeführt werden.

16. Verfahren nach Anspruch 1, ***gekennzeichnet dadurch, dass*** die pastösen/festen und/oder vorkonditionierten Abfallstoffe über ein Förderband (8) dem Mischer (9) zugeführt werden.

17. Verfahren nach Anspruch 1, ***gekennzeichnet dadurch, dass*** die staubförmigen und störstoffbefreiten Abfallstoffe über eine Magnetabscheidung (25) und anschließend über eine pneumatische Förderung (17; 24) über Vorlagesilos (12; 13) dem Dosiersilo (11) zugeführt werden.

18. Verfahren nach Anspruch 1, ***gekennzeichnet dadurch, dass*** die staubförmigen und störstoffbefreiten Abfallstoffe über eine pneumatische Förderung (17; 24) mindestens einem Outputsilo (22) zur Abgabe an Silofahrzeuge zugeführt werden.

19. Verfahren nach Anspruch 1 und 15 sowie 16, ***gekennzeichnet dadurch, dass*** als Mischer (9) ein Paddelmischer verwendet wird.

20. Verfahren nach Anspruch 1 und 19, ***gekennzeichnet dadurch, dass*** der Paddelmischer eine Welle mit Förderwerkzeugen aufweist.

21. Verfahren nach Anspruch 1, ***gekennzeichnet dadurch, dass*** als Unterkorn eine Korngröße bis maximal 4 mm Durchmesser verwendet wird.

22. Verfahren nach Anspruch 1, ***gekennzeichnet dadurch, dass*** als Überkorn eine Korngröße von mehr als 4 mm bis 1.000 mm verwendet wird.

23. Verfahren nach Anspruch 1, ***gekennzeichnet dadurch,* dass** der Förderweg der staubförmigen Materialien nach der Entleerung der Big-Bag (27) und ASB-Behälter (26) gleichzeitig als Siebung genutzt wird.

24. Verfahren nach Anspruch 1, ***gekennzeichnet dadurch,* dass** im Outputsilo (22) der von Störstoffen befreite staubförmige Abfallstoff zum Transport in Silofahrzeuge verladen und einer direkten Verwendung als Brennstoff in vorzugsweise Staubfeuerungsanlagen oder als Zuschlagstoff zur Brennstaubherstellung, vorzugsweise zur Braunkohlenstaubherstellung, verwendet wird.

25. Verfahren nach Anspruch 1, ***gekennzeichnet dadurch,* dass** der von Störstoffen bereite staubförmige Abfallstoff zum Transport in Silofahrzeuge verladen und einer direkten Verwendung/Verwertung als vorzugsweise Untertageversatz oder als Recycling-Produkt verwendet wird.

26. Vorrichtung zur Durchführung des Verfahrens nach Anspruch 1 zur Verarbeitung von staubförmigen und/oder flüssig/pastösen Abfallstoffen sowie zur Herstellung eines Mischbrennstoffes,
***gekennzeichnet dadurch, dass***
- ein Lager (30) für in Big-Bags (27) und in ASP-Behältern (26) angelieferte staubige Abfallstoffe über eine modulartige Aufnahmevorrichtung und eine Transportvorrichtung mit einem Schwingsieb (31) zur Aufteilung in einen Über- und einen Unterkornanteil verbunden ist, wobei
- der Ausgang des Schwingsiebes (31) für den Unterkornanteil aus den staubförmigen Abfallstoffen durch eine Magnetabscheidung (25) mit mindestens einem Silo (12; 14) pneumatisch verbunden ist, wobei das/die Silo(s) (12; 14) mit einer Dosiereinrichtung (11) zur Aufgabe der Abfallstoffe in einen Mischer (9) gekoppelt ist,
- ein mit flüssigen Abfallstoffen beaufschlagter Behälter (1) über eine Fördereinrichtung (1a) mit einem Beschicker (2) verbunden ist, der über eine Dickstoffpumpe (3) an den Mischer (9) gekoppelt ist,
- ein mit pastösen Abfallstoffen und Zuschlagstoffen Behälter (4) über eine Fördereinrichtung (4a) mit einen Beschicker (5) für das Vorgemisch verbunden ist, der über eine Mischschnecke (6) und einen mit einem Magnetabscheider (8) ausgestatteten Förderer (7) ebenfalls mit dem Mischer (9) gekoppelt ist,
- darüber hinaus ein mit staubförmigen Abfallstoffen gefüllter Dosiertrichter (11) über eine Fördereinrichtung (10) mit dem Mischer (9) mit Wasserdosierung gekoppelt ist, wobei
- der Auslaß des Mischer (9) über einen Förderer (18) mit einem Outputlager verbunden ist, aus welchem über eine Verladeeinrichtung (19) ein Transportmittel (20) zu beschicken ist.

27. Vorrichtung nach Anspruch 26, ***gekennzeichnet dadurch, dass*** der Auslaß des Schwingsiebes (31) für den Überkornanteil mit einem Störstoffbehälter (29) verbunden ist.

28. Vorrichtung nach Anspruch 26 und 27, ***gekennzeichnet dadurch, dass*** der Auslaß des/der Silo(s) (12; 14) mit einer pneumatischen Fördereinrichtung (17) verbunden ist.

29. Vorrichtung nach Anspruch 26, 27 und 28, ***gekennzeichnet dadurch, dass*** das/die Silo(s) (12; 14) jeweils einen Siloaufsatzfilter (13; 14) aufweisen.

30. Vorrichtung nach Anspruch 26 und 27, ***gekennzeichnet dadurch, dass*** der Auslaß des Schwingsiebes (31) für den Unterkornanteil zusätzlich über ein Silo (22) mit einem Transportmittel verbunden ist.

31. Vorrichtung nach Anspruch 26 und 27 sowie 30, ***gekennzeichnet dadurch, dass*** das Schwingsieb (31) einen Filter (28) aufweist.

32. Vorrichtung nach Anspruch 26, ***gekennzeichnet dadurch, dass*** der Magnetabscheider (8) mit einem Schrottbehälter (8a) verbunden ist.

## Claims

1. A method for processing particulate and/or liquid/paste waste materials and for producing a mixed fuel, wherein the waste materials are delivered in closed containers and are processed in a processing facility to form a particulate fuel and/or pourable mixed fuel,
***characterised in that***
big bags (27) and/or ASP containers (26) filled with particulate waste materials are fed to at least one modular receiving apparatus, opened by means of a cutting or severing tool, and the particulate waste materials are emptied onto a transport apparatus (32) having scrapers and/or brushes and are divided by means of at least one vibrating sieve (31) into an undersize fraction and an oversize fraction, wherein the undersize fraction is transported beneath the vibrating sieve (31) by the returning scraper and/or the transport apparatus in the opposite direction compared to the oversize into at least one output silo (12; 14; 22), and the oversize component is transported by means of a conveying device into at least one press container/contaminant container (29), liquid/paste waste materials delivered in parallel in closed containers are guided from containers (1, 4) via a feeder (2, 5), a thick matter pump (3), and a mixing screw (6), and a subsequent metal sorter (8) by an overbelt magnet, by means of a transport apparatus (7) to a mixer (9), and both material flows of the waste materials are fed from the at least one output silo (12; 14) via a metering silo (11) with integrated weighing system, to the mixer (9), which operates discontinuously or continuously, or are delivered to to silo vehicles for external use, wherein the mixture is then transported by means of a conveying apparatus (18) into an output store, and the big bag and ASP container emptying equipment is dedusted by means of apparatuses (13; 15; 23; 28) working in the negative pressure range.

2. The method according to claim 1, ***characterised in that*** waste carbon black and/or paint powder and/or ink powder and/or other particulate materials are used as particulate waste materials.

3. The method according to claim 1, ***characterised in that*** oil sludges and/or waste oil and/or paper sludges and/or sewage sludges and/or biogenic fractions and/or substitute fuels and/or absorbent waste materials and/or other liquid/paste/solid materials are used as liquid/paste/solid waste materials.

4. The method according to claims 1 and 2, ***characterised in that*** the particulate waste materials comprise contaminants, such as textiles and/or paper and/or wood and/or films and/or Ne metals and/or Fe metals and/or other comparable materials.

5. The method according to claims 1 and 4, ***characterised in that*** an encapsulated feed unit for big bags having corresponding crossmembers with a hanging point for the big bag loops is used as receiving apparatus.

6. The method according to claim 1, ***characterised in that*** the big bags are fixed in the receiving apparatus by hold-down devices and are set down on rotatable bars and/or rolls, which are provided with blades and between which a chain equipped with blades as cutting and/or severing tools is guided.

7. The method according to claim 6, ***characterised in that*** the chain is guided in a revolving design driven by means of chain wheels.

8. The method according to claims 1, 5, 6 and 7, ***characterised in that*** the big bags are drawn upwardly once they have been emptied, are removed from the discharge apparatus, and are fed to a big bag compaction.

9. The method according to claim 1, ***characterised in that*** particulate waste materials are delivered in an approved ASP container.

10. The method according to claims 1 and 9, ***characterised in that*** a tilting apparatus equipped with an integrated strainer bar is used to empty the ASP container.

11. The method according to claim 1, ***characterised in that*** slowly moving scrapers and brushes are guided over the vibrating sieve (31).

12. The method according to claim 11, ***characterised in that*** the scrapers and brushes are driven by means of a chain hoist.

13. The method according to claim 1, ***characterised in that*** the liquid/paste waste materials, once they have been delivered, are examined chemically and physically especially in respect of heavy metals, calorific value, halogens and consistency, in order to determine whether or not they are preconditioned, and are fed to a preconditioning in the event that there are deviations from the desired fuel quality to be attained.

14. The method according to claim 1, ***characterised in that*** materials having cohesive, absorbent properties, such as preferably paper sludges, paint sludges, biogenic fractions and substitute fuels, are used for preconditioning.

15. The method according to claim 1, ***characterised in that*** the liquid waste materials are fed to the mixer (9) by means of a thick matter pump (3).

16. The method according to claim 1, ***characterised in that*** the paste/solid and/or preconditioned waste materials are fed to the mixer (9) by means of a conveyor belt (8).

17. The method according to claim 1, ***characterised in that*** the particulate and contaminant-relieved waste materials are fed to the metering silo (11) by means of a magnetic separator (25) and then by means of a pneumatic conveyor (17; 24) via storage silos (12; 13).

18. The method according to claim 1, ***characterised in that*** the particulate and contaminant-relieved waste materials are fed via a pneumatic conveyor (17; 24) to at least one output silo (22) for delivery to silo vehicles.

19. The method according to claims 1 and 15 and 16, ***characterised in that*** a paddle mixer is used as mixer (9).

20. The method according to claims 1 and 19, ***characterised in that*** the paddle mixer has a shaft with conveying tools.

21. The method according to claim 1, ***characterised in that*** a grain size up to 4 mm diameter at most is used as undersize.

22. The method according to claim 1, ***characterised in that*** a grain size of more than 4 mm to 1,000 mm is used as oversize.

23. The method according to claim 1, ***characterised in that*** the conveying path of the particulate materials after emptying of the big bag (27) and ASB container (26) is used at the same time for sieving.

24. The method according to claim 1, ***characterised in that*** in the output silo (22) the particulate waste material relieved of contaminants is loaded for transport in silo vehicles and is used in a direct use as fuel in preferably pulverised fuel firing systems or as aggregate for pulverised fuel production, preferably pulverised lignite production.

25. The method according to claim 1, ***characterised in that*** the waste material relieved of contaminants is loaded for transport in silo vehicles and is used in a direct use/reutilisation as preferably backfill or as a recycling product.

26. An apparatus for carrying out the method according to claim 1 for processing particulate and/or liquid/paste waste materials and for producing mixed fuel,
***characterised in that***
- a store (30) for particulate waste materials delivered in big bags (27) and in ASP containers (26) is connected to a vibrating sieve (31) by means of a modular receiving apparatus and a transport apparatus for dividing said waste materials into an oversize fraction and an undersize fraction, wherein
- the outlet of the vibrating sieve (31) for the undersize fraction from the particulate waste materials is pneumatically connected to at least one silo (12; 14) by a magnetic separator (25), wherein the silo(s) (12; 14) is/are coupled to a metering device (11) in order to deliver the waste materials into a mixer (9),
- a container (1) loaded with liquid waste materials is connected by means of a conveying device (1a) to a feeder (2), which is coupled to the mixer (9) by means of a thick matter pump (3),
- a container (4) filled with paste waste materials and aggregates is connected to a feeder (5) for the pre-mix by means of a conveying device (4a), which feeder is likewise coupled to the mixer (9) by means of a mixing screw (6) and a conveyor (7) equipped with a magnetic separator (8),
- in addition, a metering hopper (11) filled with particulate waste materials is coupled by means of a conveying device (10) to the mixer (9) with water dosing, wherein
- the outlet of the mixer (9) is connected by means of a conveyor (18) to an output store, from which a transport means (20) is to be loaded by means of a loading device (19).

27. The apparatus according to claim 26, ***characterised in that*** the outlet of the vibrating sieve (31) for an oversize fraction is connected to a contaminant container (29).

28. The apparatus according to claims 26 and 27, ***characterised in that*** the outlet of the silo(s) (12; 14) is connected to a pneumatic conveying device (17).

29. The apparatus according to claims 26, 27 and 28, ***characterised in that*** the silo(s) (12; 14) has/each have a silo venting filter (13; 14).

30. The apparatus according to claims 26 and 27, ***characterised in that*** the outlet of the vibrating sieve (31) for the undersize fraction is additionally connected by means of a silo (22) to a transport means.

31. The apparatus according to claims 26 and 27 and 30, ***characterised in that the*** vibrating sieve (31) has a filter (28).

32. The apparatus according to claim 26, ***characterised in that*** the magnetic separator (8) is connected to a scrap container (8a).

## Revendications

1. Procédé destiné à traiter des déchets atomisés et/ou liquides/pâteux ainsi qu'à fabriquer un combustible mixte, les déchets étant livrés dans des réservoirs clos et traités dans une installation de traitement en un combustible atomisé et/ou en un combustible en vrac,
***caractérisé en ce qu'***
on amène des big-bags (27) et/ou des cuves ASP (26) rempli(e)s de déchets atomisés vers au moins un dispositif récepteur modulaire, on les ouvre au moyen d'un outil de coupe ou de sectionnement et on vide les déchets atomisés sur un dispositif de transport (32) doté de racloirs et/ou de brosses et au moyen d'au moins un crible vibrant (31), on les divise en une part de refus inférieurs et une part de refus supérieurs, la part de refus inférieurs étant transportée en-dessous du crible vibrant (31) par les racloirs qui reculent et/ou par le dispositif de transport dans la direction opposée à celle des refus supérieurs dans au moins un silo de sortie (12; 14; 22) et la part de refus supérieurs étant transportée par l'intermédiaire d'un système de convoyage dans un moins un compacteur/conteneur d'impuretés (29), des déchets liquides/pâteux livrés en parallèle dans des réservoirs clos étant conduits des réservoirs (1,4) par l'intermédiaire d'un chargeur (2,5), d'une pompe pour matière épaisses (3) et d'une vis mélangeuse (6) ainsi que d'une trieuse métallique (8) consécutive, par un aimant surplombant par l'intermédiaire du dispositif de transport (7) vers un malaxeur (9) et les deux flux de matière des déchets étant alimentés hors de l'au moins un silo de sortie (12; 14) par l'intermédiaire d'un silo de dosage (11) avec un système de pesage intégré vers le malaxeur (9) fonctionnant de manière discontinue ou continue ou il s'effectue une distribution à des véhicules-citernes pour une revalorisation externalisée, sachant que par la suite, le mélange est transporté par l'intermédiaire d'un dispositif de convoyage (18) dans un stock de sortie et le complexe de vidange des big-bags et cuves ASP est dépoussiéré par des dispositifs (13; 15; 23; 28) fonctionnant sous dépression.

2. Procédé selon la revendication 1, ***caractérisé en ce qu'***en tant que déchets atomisés, on utilise des déchets de suie et/ou de la poudre laque et/ou de peinture et/ou d'autres matières atomisées.

3. Procédé selon la revendication 1, ***caractéris** ' **en ce qu***'en tant que déchets liquides/pâteux/solides, on utilise des boues résiduaires d'hydrocarbures et/ou des huiles usagées et/ou des boues résiduaires de papeterie et/ou des boues résiduaires de curage et/ou des fractions biogènes et/ou des combustibles de substitution et/ou des déchets absorbants et/ou d'autres matières liquides/pâteuses/solides.

4. Procédé selon la revendication 1 et 2, ***caractérisé en ce que*** les déchets atomisés comportent des impuretés comme des textiles et/ou du papier et/ou du bois et/ou des films et/ou des métaux NE et/ou des métaux Fe et/ou d'autres matières comparables.

5. Procédé selon la revendication 1 et 4, ***caractérisé en ce qu'***en tant que dispositif récepteur, on utilise une unité de chargement blindée pour des big-bags, dotée de traverses correspondantes, avec des systèmes d'accrochage pour les boucles des big-bags.

6. Procédé selon la revendication 1, ***caractérisé en ce qu'***on fixe les big-bags dans le dispositif récepteur par des organes de retenue et on les dépose sur des barres et/ou des rouleaux qui sont muni(e)s de lames, entre lesquel(le)s en tant qu'outils de coupe et/ou de sectionnement est guidée une chaîne dotée de lames.

7. Procédé selon la revendication 6, ***caractérisé en ce que*** la chaîne est guidée dans une structure en révolution, entraînée par des pignons..

8. Procédé selon la revendication 1, 5, 6 et 7, ***caractérisé en ce qu***'après leur vidange, les big-bags sont tirés vers le haut, retirés du système de déchargement et amené vers un compactage de big-bags .

9. Procédé selon la revendication 1, ***caractérisé en ce que*** des déchets atomisés sont livrés dans une cuve ASP homologuée.

10. Procédé selon la revendication 1 et 9, ***caractérisé en ce que*** pour vider les cuves ASP, on utilise un dispositif de basculement équipé d'une grille à barreaux intégrée.

11. Procédé selon la revendication 1, ***caractérisé en ce que*** sur le crible vibrant (31) sont guidés des racloirs et des brosses se déplaçant lentement.

12. Procédé selon la revendication 11, ***caractérisé en ce que*** les racloirs et les brosses sont entraînés par l'intermédiaire d'un palan à chaîne.

13. Procédé selon la revendication 1, ***caractérisé en ce qu***'après leur livraison, les déchets liquides/pâteux sont analysés au niveau chimique et physique, particulièrement au niveau de la présence de métaux lourds, au niveau de leur pouvoir calorifique, de la présence d'halogènes, de leur consistance, pour constater s'il faut ou non procéder à un préconditionnement et en présence d'écarts par rapport à la qualité souhaitée qui doit être obtenue pour le combustible, ils sont amenés vers un préconditionnement.

14. Procédé selon la revendication 1, ***caractérisé en ce que*** pour le pré-conditionnement, on utilise des matières à propriétés liantes, absorbantes, comme de préférence des boues résiduaires de papeterie, des boues résiduaires de laque, des fractions biogènes et des combustibles de substitution.

15. Procédé selon la revendication 1, ***caractérisé en ce que*** les déchets liquides sont amenés par l'intermédiaire d'une pompe pour matières épaisses (3) vers le malaxeur (9).

16. Procédé selon la revendication 1, ***caractérisé en ce que*** les déchets pâteux/solides et/ou préconditionnés sont amenés par l'intermédiaire d'une bande de convoyage (8) vers le malaxeur (9).

17. Procédé selon la revendication 1, ***caractérisé en ce que*** les déchets atomisés et libérés des impuretés sont amenés par l'intermédiaire d'un séparateur magnétique (25) et ensuite d'un convoyage pneumatique (17; 24), par l'intermédiaire de silos collecteurs (12; 13) vers le silo de dosage (11).

18. Procédé selon la revendication 1, ***caractérisé en ce que*** les déchets atomisés et libérés des impuretés sont amenés par l'intermédiaire d'un convoyage pneumatique (17; 24) vers au moins un silo de sortie (22) pour être distribués à des véhicules-citernes.

19. Procédé selon la revendication 1 et 15, ainsi que 16, ***caractérisé en ce qu'***en tant que malaxeur (9), on utilise un malaxeur à aubes.

20. Procédé selon la revendication 1 et 19, ***caractérisé en ce que*** le malaxeur à aubes comporte un arbre muni d'outils de convoyage.

21. Procédé selon la revendication 1, ***caractérisé en ce qu'en*** tant que refus inférieur, on utilise une grosseur de grains de jusqu'à un maximum de 4 mm de diamètre.

22. Procédé selon la revendication 1, ***caractérisé en ce qu'en*** tant que refus supérieur, on utilise une grosseur de grains de plus de 4 mm à 1.000 mm.

23. Procédé selon la revendication 1, ***caractérisé en ce qu***'après la vidange des big-bags (27) et des cuves ASP (26), le trajet de convoyage des matières atomisées est simultanément utilisé pour le criblage.

24. Procédé selon la revendication 1, ***caractérisé en ce que*** dans le silo de sortie (22), les déchets libérés des impuretés sont transbordés pour le transport dans des véhicules-citernes et sont voués à une utilisation directe comme combustible, de préférence dans des équipements de chauffage aux combustibles pulvérisés ou en tant qu'additif pour la fabrication de combustibles pulvérisés, de préférence pour la fabrication de lignite pulvérisé.

25. Procédé selon la revendication 1, ***caractérisé en ce que*** les déchets atomisés libérés des impuretés sont transbordés pour le transport dans des véhicules citernes et voués à une utilisation/revalorisation directe de préférence en tant que mélange de fond ou de produit de recyclage.

26. Dispositif destiné à réaliser le procédé selon la revendication 1 de traitement de déchets atomisés et/ou liquides/pâteux, ainsi que pour la fabrication d'un combustible mixte
***caractérisé en ce***
- **qu'**un entrepôt (30) pour des déchets atomisés livrés dans des big-bags (27) et dans des cuves ASP (26) est relié par l'intermédiaire d'un dispositif récepteur modulaire et d'un dispositif de transport avec un crible vibrant (31) destiné à une division en une part de refus supérieur et une part de refus inférieur, sachant que
- pour la part de refus supérieur des déchets atomisés, la sortie du crible vibrant (31) est pneumatiquement reliée par un séparateur aimanté (25) avec au moins un silo (12; 14), le/les silo(s) (12; 14) étant couplé(s) avec un système de dosage (11) destiné à distribuer les déchets dans un malaxeur (9),
- **qu'**un réservoir (1) rempli de déchets liquides est relié par l'intermédiaire d'un système de convoyage (1a) avec un chargeur (2), qui par l'intermédiaire d'une pompe pour matières épaisses (3) est couplée au malaxeur (9),
- **qu'**un réservoir (4) rempli de déchets pâteux et d'additifs est relié par l'intermédiaire d'un système de convoyage (4a) avec un chargeur (5) pour le prémélange, qui par l'intermédiaire d'une vis mélangeuse (6) et d'un convoyeur (7) équipé d'un séparateur magnétique (8) est également couplé avec le malaxeur (9),
- **que** par ailleurs, une trémie de dosage (11) également remplie de déchets est également couplée par l'intermédiaire d'un système de convoyage (10) avec malaxeur (9) avec dosage d'eau,
- la sortie du malaxeur (9) étant reliée par l'intermédiaire d'un convoyeur (18) avec un entrepôt de sortie, à partir duquel, par l'intermédiaire d'un système de transbordement (19), un moyen de transport (20) doit être chargé.

27. Dispositif selon la revendication 26, ***caractérisé en ce que*** la sortie du crible vibrant (31) pour la part de refus supérieur est reliée avec un réservoir à impuretés (29).

28. Dispositif selon la revendication 26 et 27, ***caractérisé en ce que*** la sortie du/des silo(s) (12 ; 14) est reliée avec un système de convoyage (17) pneumatique.

29. Dispositif selon la revendication 26, 27 et 28, ***caractérisé en ce que*** le/les silo(s) (12 ; 14) comportent chacun une tête de filtration (13 ; 14).

30. Dispositif selon la revendication 26 et 27, ***caractérisé en ce que*** la sortie du crible vibrant (31) pour la part de refus inférieur est reliée en supplément par l'intermédiaire d'un silo (22) avec un moyen de transport.

31. Dispositif selon la revendication 26 et 27, ainsi que 30, ***caractérisé en ce que*** le crible vibrant (31) comporte un filtre (28).

32. Dispositif selon la revendication 26, ***caractérisé en ce que*** le séparateur magnétique (8) est relié avec un réservoir à rebut (8a).
